(19) Europäisches Patentamt / European Patent Office / Office européen des brevets

(11) **EP 4 339 889 A1**

(12) **DEMANDE DE BREVET EUROPEEN**

(43) Date de publication:
**20.03.2024   Bulletin 2024/12**

(21) Numéro de dépôt: 23197075.7

(22) Date de dépôt: **13.09.2023**

(51) Classification Internationale des Brevets (IPC):
**G06T 7/49** $^{(2017.01)}$   **G06T 7/529** $^{(2017.01)}$
**G06T 5/00** $^{(2024.01)}$   **G06T 11/00** $^{(2006.01)}$
**G01N 21/956** $^{(2006.01)}$   G06T 3/00 $^{(2024.01)}$
G06T 7/00 $^{(2017.01)}$   G06T 3/40 $^{(2024.01)}$

(52) Classification Coopérative des Brevets (CPC):
**G06T 7/49; G06T 11/001;** G01N 21/956;
G06T 2207/30108

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:  **13.09.2022   FR 2209178**

(71) Demandeur: **Commissariat à l'énergie atomique et aux énergies alternatives**
**75015 Paris (FR)**

(72) Inventeur: **QUEMERE, Patrick**
**38054 GRENOBLE CEDEX 9 (FR)**

(74) Mandataire: **Lavoix**
**2, place d'Estienne d'Orves**
**75441 Paris Cedex 09 (FR)**

(54) **PROCÉDÉ ET DISPOSITIF DE CALCUL AUTOMATIQUE DE MOTIF ÉLÉMENTAIRE DANS UNE IMAGE NUMÉRIQUE REPRÉSENTATIVE DE GRANDEURS PHYSIQUES COMPORTANT UNE RÉPÉTITION PÉRIODIQUE DE MOTIFS**

(57)    Ce procédé comporte des étapes mises en oeuvre par un processeur de calcul, de :
- obtention (30) d'une image numérique initiale,
- détermination (32) d'au moins deux périodes de répétition périodique de motifs dans l'image numérique initiale, chaque période étant définie par un vecteur de base ayant une direction et une longueur associées, les vecteurs de base formant un repère de référence initial,
- détermination (42) d'une matrice de projection permettant de passer du repère de référence initial à un repère de référence orthonormé,
- calcul (44) d'un motif de référence projeté, dans le repère de référence orthonormé, utilisant la matrice de projection pour mettre en correspondance une pluralité de pixels de l'image numérique initiale et un pixel dudit motif de référence projeté,
- calcul (46) d'un motif élémentaire de référence, dans le repère de référence initial, à partir du motif de référence projeté dans le repère de référence orthonormé.

EP 4 339 889 A1

FIG.2

**Description**

La présente invention concerne un procédé et un dispositif de calcul automatique de motif élémentaire dans une image numérique représentative de grandeurs physiques comportant une répétition périodique de motifs.

L'invention se situe dans le domaine du traitement d'images numériques présentant une répétition périodique de motifs, et trouve des applications dans les domaines de la caractérisation de telles images.

En particulier, l'invention trouve des applications dans la détection de défauts dans des images numériques comportant une répétition périodique de motifs, et notamment dans des images numériques représentatives d'échantillons de matériaux, comme par exemple des matériaux cristallins ou matériaux composites. Une telle détection de défauts est par exemple utile pour l'inspection de qualité lors de la fabrication de circuits électroniques ou autres dispositifs comportant des matériaux comportant des motifs répétitifs.

L'invention trouve également des applications dans toute inspection de défauts sur des échantillons ou produits comportant des motifs répétitifs, par exemple de produits issus de la sérigraphie, ou obtenus par lithographie.

En outre, l'invention trouve une application dans la caractérisation de la variabilité dimensionnelle des motifs périodiques d'une image numérique représentative de grandeurs physiques comportant une répétition périodique de motifs.

L'analyse de propriétés physiques de matériaux par traitement de données d'images, en particulier obtenues par microscopie, est un domaine technique connu. Les images sont par exemple obtenues par microscopie électronique en transmission à haute résolution, microscopie de fluorescence, microscopie à force atomique, microscopie à effet tunnel ou tomographie électronique par exemple. Les images de microscopie obtenues sont des images à résolution atomique, c'est-à-dire de résolution spatiale inférieure ou égale à 2 nanomètres, et plus spécifiquement inférieure à 1 nanomètre. Les images acquises peuvent être bruitées, ce qui rend encore plus difficile la détection d'éventuels défauts dans la structure d'un échantillon de matériau observé.

Deux familles de méthodes sont généralement utilisées pour la détection de répétition périodique de motifs et la détection de présence de défauts, ces familles comportant une première famille de méthodes basées sur la mise en correspondance de motifs prédéterminés (en anglais, « template matching ») et une deuxième famille de méthodes à base de décomposition par transformation de Fourier ou par transformation en ondelettes. En général les méthodes connues sont complexes d'un point de vue calculatoire et nécessitent des connaissances préalables, par exemple la connaissance de motifs périodiques prédéterminés pour divers types de matériaux ou un ensemble de paramètres d'initialisation qui doivent être fournis par un expert.

La présente invention a pour objet de remédier aux inconvénients de l'état de la technique en proposant un procédé de calcul automatique de motif élémentaire dans une image numérique comportant une répétition périodique de motifs, qui soit moins coûteux d'un point de vue calculatoire et auto-adaptatif. Des applications pour la détection de défauts et pour la caractérisation de la variabilité dimensionnelle sont notamment envisagées.

A cet effet, l'invention propose, selon un aspect, un procédé de calcul automatique de motif élémentaire dans une image numérique représentative de grandeurs physiques comportant une répétition périodique de motifs, l'image numérique étant représentée par au moins une matrice de pixels, chaque pixel ayant une valeur d'intensité. Le procédé comporte des étapes mises en oeuvre par un processeur de calcul, de :

- obtention d'une image numérique initiale,
- détermination d'au moins deux périodes de répétition périodique de motifs dans l'image numérique initiale, chaque période étant définie par un vecteur de base ayant une direction et une longueur associées, lesdits vecteurs de base formant un repère de référence initial,
- détermination d'une matrice de projection permettant de passer du repère de référence initial à un repère de référence orthonormé,
- calcul d'un motif de référence projeté, dans le repère de référence orthonormé, en mettant en oeuvre ladite matrice de projection pour mettre en correspondance une pluralité de pixels de l'image numérique initiale et un pixel dudit motif de référence projeté,
- calcul d'un motif élémentaire de référence, dans le repère de référence initial, à partir du motif de référence projeté dans le repère de référence orthonormé. Avantageusement, le procédé proposé est auto-adaptatif et permet de calculer un motif élémentaire de référence à partir d'une image numérique initiale, qui peut être bruitée ou présenter des défauts. Le procédé est auto-adaptatif et ne requiert pas d'ajustement de paramètres par un opérateur.

Le procédé de calcul automatique de motif élémentaire selon l'invention peut également présenter une ou plusieurs des caractéristiques ci-dessous, prises indépendamment ou selon toutes les combinaisons techniquement envisageables.

L'obtention d'une image numérique initiale comporte une acquisition de ladite image numérique initiale par microscopie, ladite image numérique initiale étant représentative d'un échantillon de matériau.

La détermination d'au moins deux périodes de répétition périodique de motifs comporte un calcul d'autocorrélation de l'image numérique initiale pour obtenir un champ d'autocorrélation, et une détection des maxima dans ledit champ d'autocorrélation.

Le calcul d'un motif de référence projeté comporte, pour chaque pixel dudit motif de référence dans le repère de référence orthonormé, un calcul d'une valeur d'intensité dudit pixel comportant une projection pour obtenir une pluralité de pixels correspondants dans l'image numérique initiale, et un calcul d'une valeur moyenne des valeurs d'intensité desdits pixels correspondants.

Le calcul d'un motif élémentaire de référence dans le repère de référence initial à partir du motif de référence projeté dans le repère de référence orthonormé met en oeuvre un opérateur d'interpolation.

L'opérateur d'interpolation met en oeuvre une interpolation bilinéaire.

Le procédé comporte en outre des étapes de calcul d'une image numérique reconstruite périodisée, et de détection de défauts par estimation d'une différence entre l'image numérique initiale et l'image numérique reconstruite périodisée.

Le calcul d'une image numérique reconstruite périodisée comporte un calcul de ladite image numérique reconstruite périodisée en utilisant la matrice de projection et les valeurs d'intensité dudit motif élémentaire de référence.

Le procédé comporte en outre une étape de calcul de variabilité dimensionnelle du motif élémentaire de référence dans le repère de référence initial.

Le calcul de variabilité comporte, pour au moins une direction choisie, un calcul de profil dudit motif élémentaire de référence selon ladite direction.

Selon un autre aspect, l'invention concerne un programme d'ordinateur comportant des instructions logicielles qui, lorsqu'elles sont exécutées par un dispositif électronique programmable, mettent en oeuvre un procédé calcul automatique de motif élémentaire tel que brièvement décrit ci-dessus.

Selon un autre aspect, l'invention concerne un dispositif de calcul automatique de motif élémentaire dans une image numérique représentative de grandeurs physiques comportant une répétition périodique de motifs, l'image numérique étant représentée par au moins une matrice de pixels, chaque pixel ayant une valeur d'intensité.

Le dispositif comporte un processeur de calcul, configuré pour mettre en oeuvre :

- un module d'obtention d'une image numérique initiale,
- un module de détermination d'au moins deux périodes de répétition périodique de motifs dans l'image numérique initiale, chaque période étant définie par un vecteur de base ayant une direction et une longueur associées, lesdits vecteurs de base formant un repère de référence initial,
- un module de détermination d'une matrice de projection permettant de passer du repère de référence initial à un repère de référence orthonormé, et de calcul d'un motif de référence projeté, dans le repère de référence orthonormé, en mettant en oeuvre ladite matrice de projection pour mettre en correspondance une pluralité de pixels de l'image numérique initiale et un pixel dudit motif de référence projeté, et
- un module de calcul d'un motif élémentaire de référence, dans le repère de référence initial, à partir du motif de référence projeté dans le repère de référence orthonormé.

Le dispositif de calcul automatique de motif élémentaire selon l'invention peut également présenter une ou plusieurs des caractéristiques ci-dessous, prises indépendamment ou selon toutes les combinaisons techniquement envisageables.

Ce dispositif comporte en outre un module de calcul d'une image numérique reconstruite périodisée, et de détection de défauts par estimation d'une différence entre l'image numérique initiale et l'image numérique reconstruite périodisée.

Ce dispositif comporte en outre un module de calcul de variabilité dimensionnelle du motif élémentaire de référence dans le repère de référence initial.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 est un schéma-bloc d'un système d'inspection d'images comportant un dispositif de calcul automatique de motif élémentaire dans une image numérique représentative de grandeurs physiques comportant une répétition périodique de motifs ;

[Fig 2] la figure 2 est un synoptique des principales étapes d'un procédé de calcul automatique de motif élémentaire dans une image numérique représentative de grandeurs physiques comportant une répétition périodique de motifs selon un mode de réalisation ;

[Fig 3] la figure 3 illustre un exemple d'image numérique initiale comportant une zone de défauts ;

[Fig 4] la figure 4 illustre schématiquement un premier mode de réalisation d'une projection pour calculer un motif de référence projeté ;

[Fig 5] la figure 5 illustre schématiquement un deuxième mode de réalisation d'une projection pour calculer un motif de référence projeté ;

[Fig 6] la figure 6 illustre un exemple de motif de référence projeté et de motif élémentaire de référence correspondant ;

[Fig 7] la figure 7 illustre un exemple d'image numérique reconstruite périodisée pour l'image numérique initiale de la figure 3 ;

[Fig 8] la figure 8 illustre un exemple d'image de différence entre l'image reconstruite périodisée et l'image numérique initiale de la figure 7 ;

[Fig 9] la figure 9 illustre un exemple d'application du procédé dans le cas d'une forêt de nanofils.

Le procédé et le dispositif de calcul automatique de motif élémentaire sont plus particulièrement détaillés dans l'application de détection automatique de défauts dans une image numérique seront décrits ci-après dans une application de détection de défauts dans des échantillons de matériaux observés par microscopie.

Cependant, l'invention ne se limite pas au cas des images acquises par microscopie, et s'applique pour toutes images numériques comportant des motifs répétés périodiquement.

En outre, l'application à la caractérisation de la variabilité dimensionnelle du motif élémentaire est également décrite.

En particulier, le procédé et le dispositif de calcul automatique de motif élémentaire dans une image numérique seront décrits dans le cas d'images numériques bidimensionnelles, mais s'appliquent de manière analogue dans le cas N-dimensionnel, par exemple pour N=3.

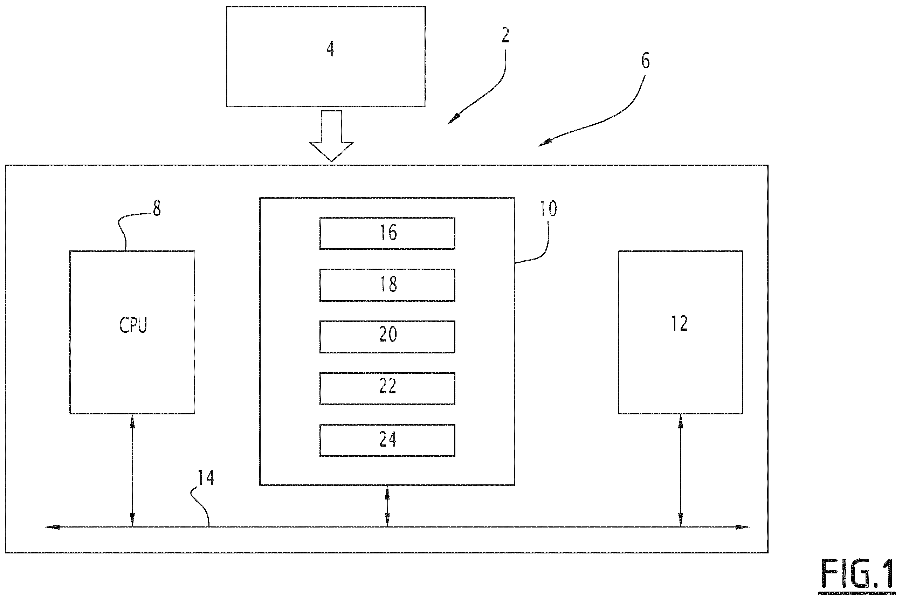

La **figure 1** illustre schématiquement un système 2 d'inspection d'images numériques représentatives de grandeurs physiques, acquises par un microscope électronique 4.

Dans un mode de réalisation, le microscope électronique 4 est un microscope électronique en transmission (TEM) qui permet d'acquérir des images d'un échantillon d'une structure physique (matériau ou dispositif) observé. Par exemple, la structure physique observée comporte des cristaux.

Dans un mode de réalisation, les images numériques sont acquises par le procédé STEM (pour « Scanning Transmission Electron Microscope ») EDX (pour « Energy Dispersive X-Ray Analysis »).

Chaque image acquise est représentée sous forme d'image numérique, comportant une ou plusieurs matrices de pixels, chaque pixel ayant une position spatiale et une valeur d'intensité associée.

Dans la suite, on considère des images numériques bidimensionnelles, les valeurs d'intensité étant représentées en niveaux de gris, par exemple entre 0 et 255.

Le système 2 comporte un dispositif 6 de calcul automatique de motif élémentaire, applique à la détection automatique de défauts dans une image numérique acquise, appelée image numérique initiale.

Le dispositif 6 est, dans un mode de réalisation, un dispositif électronique programmable, e.g. un ordinateur.

Le dispositif 6 comporte un processeur 8 associé à une mémoire électronique 10. Optionnellement, le dispositif 6 comporte une interface homme-machine 12, comportant notamment un écran d'affichage de données. En outre le dispositif 6. Les éléments 8, 10, 12 du dispositif 6 sont adaptés pour communiquer via un bus de communication 14.

Le processeur 8 est configuré pour exécuter des modules 16, 18, 20, 22, 24 mémorisés dans la mémoire électronique 10, pour mettre en oeuvre le procédé de détection automatique de défauts dans une image numérique.

Le module 16 est un module d'obtention ou réception d'une image numérique initiale, à partir d'une image acquise par le microscope 4.

Selon une variante, le module d'obtention 16 obtient une image numérique initiale à partir d'une mémoire électronique, interne ou externe au dispositif 6.

Le module 18 est un module de détermination d'au moins deux périodes de répétition périodique de motifs dans l'image numérique initiale, chaque période étant définie par un vecteur de base ayant une direction et une longueur associées. Les vecteurs de base forment un repère de référence initial.

Le module 20 est un module de projection, qui effectue la détermination d'une matrice de projection permettant de passer du repère de référence initial à un repère de référence orthonormé, et un calcul d'un motif de référence projeté, dans le repère de référence orthonormé, en mettant en oeuvre ladite matrice de projection permettant de mettre en correspondance une pluralité de pixels de l'image numérique initiale et un pixel dudit motif de référence projeté.

Le module 22 est un module de calcul d'un motif élémentaire de référence, dans le repère de référence initial, à partir du motif de référence projeté dans le repère de référence orthonormé.

Le module 24 est un module d'application.

Selon un mode de réalisation, le module 24 met en oeuvre un calcul d'une image numérique reconstruite périodisée à partir dudit motif élémentaire de référence. L'image numérique reconstruite périodisée est une image simulée ou théorique, formée à partir du motif de référence qui a été calculé. Le module 24 met également en oeuvre une détection de défauts par différence entre l'image numérique initiale et l'image reconstruite. La différence estimée permet de détecter et localiser les défauts, i.e. les zones de l'image numérique initiale dans lesquelles la répétition périodique de motif diffère de l'image numérique reconstruite périodisée. De plus, la différence comporte également le bruit présent dans l'image numérique initiale.

Selon un autre mode de réalisation, le module 24 met en oeuvre un calcul de variabilité dimensionnelle, en particulier latérale et/ou verticale, du motif élémentaire de référence.

Dans un mode de réalisation, les modules 16,18, 20, 22, 24 sont réalisés chacun sous forme d'un logiciel de calcul automatique de motif élémentaire dans une image numérique représentative de grandeurs physiques comportant une répétition périodique de motifs, et forment un programme d'ordinateur.

En variante non représentée, les modules 16,18, 20, 22, 24 sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphies processing*), ou encore sous forme d'un circuit intégré dédié, tel qu'un ASIC (de l'anglais *Application Spécifie Integrated Circuit*).

Le logiciel est en outre apte à être enregistré, sous forme de programme d'ordinateur comportant des instructions logicielles, sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

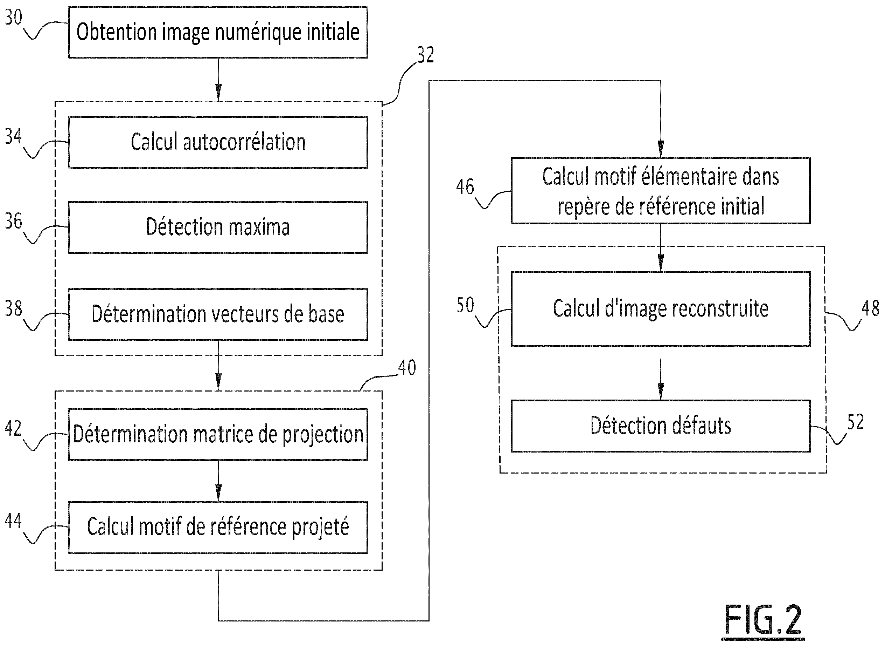

La **figure 2** est un synoptique des principales étapes du procédé de calcul automatique d'un motif élémentaire et de la détection automatique de défauts et/ou du calcul de la variabilité dimensionnelle dans une image numérique dans un mode de réalisation.

Ce procédé est exécuté par le processeur d'un dispositif électronique de calcul tel que le dispositif 6 décrit ci-dessus.

Le procédé comporte une étape 30 d'obtention d'une image numérique initiale, l'image numérique initiale comportant une répétition périodique de motifs, ainsi que du bruit et pouvant contenir des défauts.

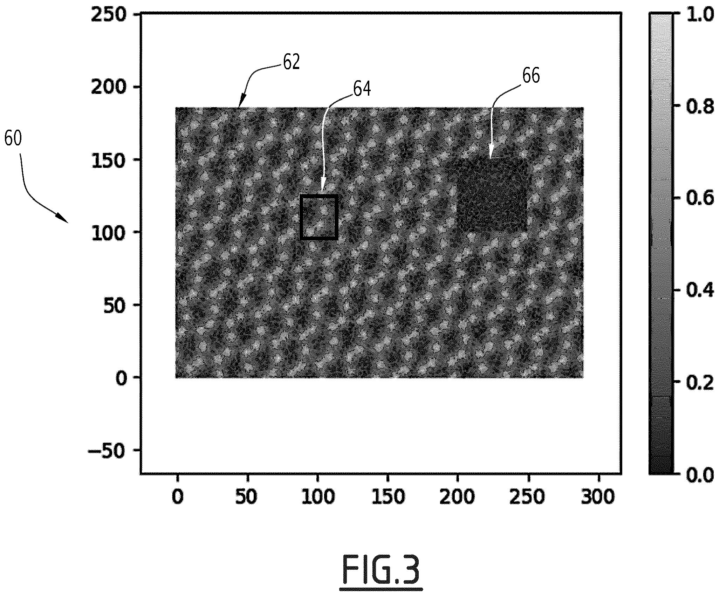

La **figure 3** illustre, à titre d'exemple, une image numérique initiale 60, comportant une répétition de motifs sous forme de taches 62 claires sur un fond sombre, un motif répété étant formé par un ensemble 64 encadré sur l'image numérique initiale 60.

L'image numérique initiale 60 comprend du bruit, comme cela est visible sur la figure 3, ainsi qu'une zone 66 de défaut, qui se présente sous la forme d'une zone dépourvue de motifs 64, de forme rectangulaire, d'aire environ égale à 5% de l'aire totale de l'image numérique initiale 60.

L'image numérique 60 illustré dans la figure 3 a été générée par simulation, à titre d'image de test.

De retour à la figure 2, le procédé comporte une étape 32 de détermination d'au moins deux périodes de répétition périodique de motifs dans l'image numérique initiale.

L'étape 32 de détermination de périodes de répétition comprend des sous-étapes, respectivement une sous-étape 34 de calcul d'autocorrélation de l'image numérique initiale pour obtenir un champ d'autocorrélation, une sous-étape 36 de détection de maxima dans le champ d'autocorrélation calculé et une sous-étape 38 de détermination de vecteurs de base, chaque vecteur de base ayant une direction et une longueur, chaque vecteur étant associé à une période de répétition du motif calculée à partir des maxima calculés.

La détermination des périodes de répétition de motifs est par exemple réalisée en utilisant la méthode décrite dans l'article « Extracting periodicity of a regular texture based on autocorrelation functions » de Lin et al, publié dans Pattern Recognition Letters, vol.19, mai 1997.

La détermination comporte, dans un mode de réalisation, le parcours de toutes les paires de points retournées par l'autocorrélation (étape 34), la création de vecteurs associés et d'un tableau d'occurrences correspondant. Les deux vecteurs présentant le plus d'occurrences sont choisis comme vecteurs initiaux, $\vec{V_a}$ et $\vec{V_b}$. Toutes les combinaisons linéaires de pondérations -1, 0 ou 1 des vecteurs initiaux permettant également de former une base de vecteurs.

Par exemple, dans un mode de réalisation, deux vecteurs de base sont choisis pour former un repère de référence initial, de préférence des vecteurs de base qui sont respectivement les vecteurs le plus proches de la direction horizontale et de la direction verticale dans le premier quadrant d'un repère spatial parmi les combinaisons linéaires des vecteurs initiaux..

Ces vecteurs de base sont par exemple notés $\vec{V_0}$ et $\vec{V_1}$ de coordonnées respectives $(i_0, j_0)$ et $(i_1, j_1)$.

Dans un mode de réalisation, les coordonnées respectives sont exprimées par des nombres réels, avec un nombre de valeurs décimales choisi.

Le procédé comporte ensuite une étape 40 de projection pour obtenir un motif de référence projeté.

L'étape 40 comporte une sous-étape 42 de détermination d'une matrice de projection permettant de passer du repère de référence initial formé par les vecteurs de base $\vec{V_0}$ et $\vec{V_1}$ à un repère de référence orthonormé ou vice-versa.

Pour passer d'un repère orthonormé au repère de référence initial formé par les vecteurs de base $\vec{V_0}$ et $\vec{V_1}$ on applique une matrice Proj qui s'écrit :

[MATH 1]

$$Proj = \begin{bmatrix} i_0 & i_1 \\ j_0 & j_1 \end{bmatrix}$$

Pour passer du repère de référence initial formé par les vecteurs de base $\vec{V_0}$ et $\vec{V_1}$ au repère de référence orthonormé on applique la matrice de projection $Proj^{-1}$ :

[MATH 2]

$$Proj^{-1} = \frac{1}{i_0 j_1 - i_1 j_0} \begin{bmatrix} j_1 & -i_1 \\ -j_0 & i_0 \end{bmatrix}$$

De plus, dans le repère de référence orthonormé (repère de projection) est appliqué un opérateur « modulo » vectoriel, pour chacune des coordonnées, en fonction du nombre mxn de motifs que l'on cherche à représenter.

L'opérateur modulo vectoriel (m,n) est appliqué de la manière suivante

[MATH 3]

$$x' = x(mod)m$$

Et

$$y' = y(mod)n$$

Par exemple, dans un mode de réalisation, (m,n)=(1,1) lorsqu'un seul motif est à représenter.

Bien entendu, d'autres valeurs (m,n) peuvent être choisies.

Dans une variante, l'opérateur modulo est appliqué sur une seule des coordonnées, ce qui revient à périodiser suivant une seule direction de périodicité.

La sous-étape 42 de détermination d'une matrice de projection est suivie d'une sous-étape 44 de calcul d'un motif de référence projeté dans le repère de référence orthonormé.

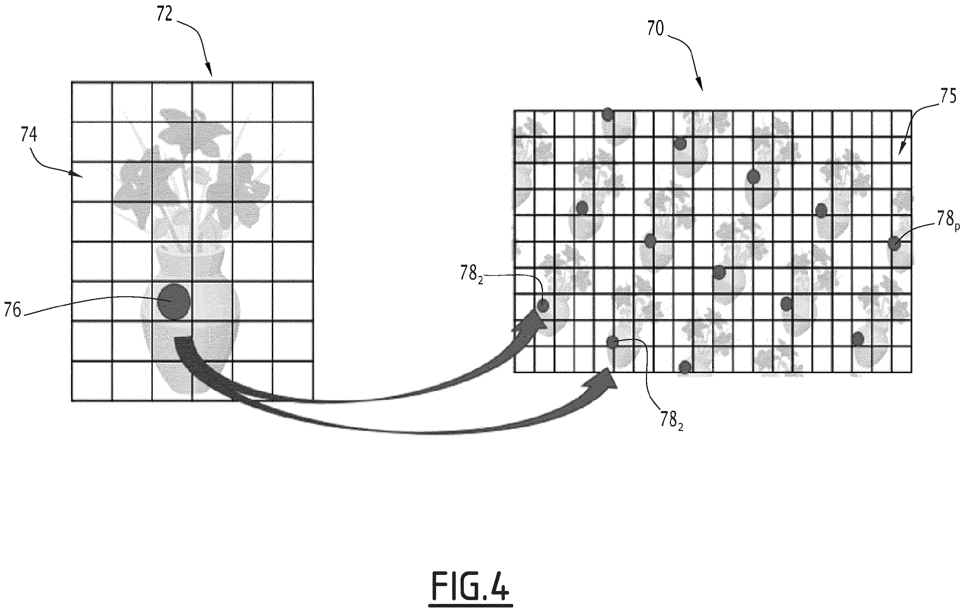

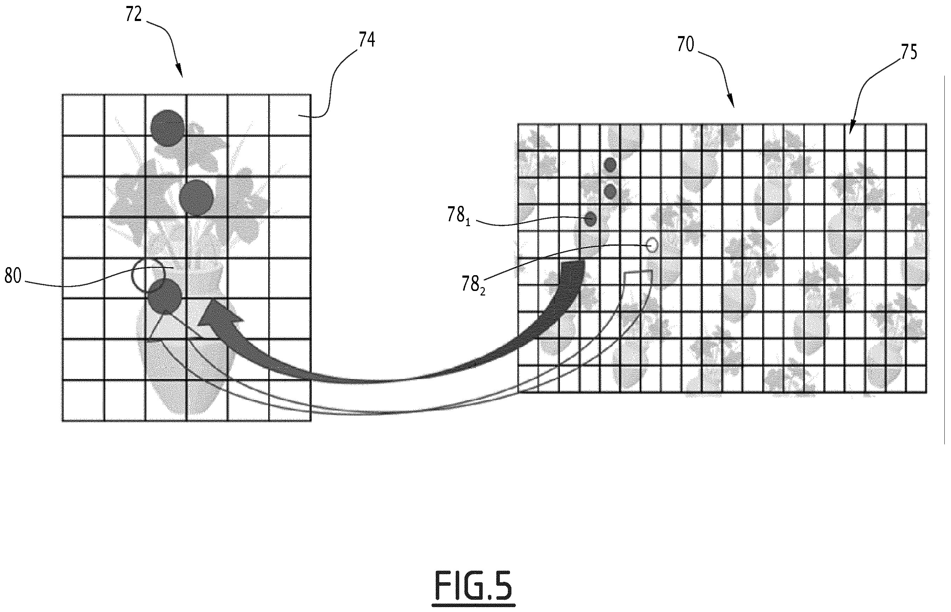

Deux modes de réalisation du calcul d'un motif de référence projeté sont envisagés, illustrés en référence respectivement aux **figures 4 et 5.**

Dans ces figures sont représentés schématiquement une image numérique initiale 70, comportant une répétition de motifs, et un motif de référence projeté 72.

Le motif de référence projeté 72 est formé sur un quadrillage unitaire de projection 74.

L'image numérique initiale est représentée sur un quadrillage (ou grille) 75 correspondant à la matrice de pixels associée, chaque point du quadrillage ayant des coordonnées (x,y) associées, qui sont des valeurs entières.

Le motif de référence projeté 72 est représenté sur le quadrillage unitaire de projection 74. La résolution du quadrillage 74 est choisie, de préférence proche de la résolution de l'image initiale, par exemple en fonction des dimensions des vecteurs de base $\vec{V_0}$ et $\vec{V_1}$.

Dans la figure 4 est illustré schématiquement un premier mode de réalisation dans lequel chaque point de coordonnées (x',y') du quadrillage unitaire de projection 74 est considéré. Un tel point 76 est illustré à la figure 4.

Les coordonnées (x', y') sont des valeurs entières dans cet exemple.

Des coordonnées $\{(x_k, y_k), 1 \le k \le P\}$, de P points correspondants obtenues par application de la matrice de projection Proj explicitée par la formule [MATH 1].

Les points $(x_k, y_k)$ sont obtenus par répétition périodique selon la formule suivante :

[MATH 4]

$$(x_k, y_k) = Proj \times (x', y')^T + (p \times m \times V_0, q \times n \times V_1)$$

Où $(.,.)^T$ est l'opérateur de transposition, p et q sont des valeurs entières. Le nombre P de points obtenus correspond au nombre de combinaisons de valeurs entières de p et q distinctes, telles que les coordonnées $(x_k,y_k)$ calculées demeurent à l'intérieur du quadrillage 75.

Les flèches représentées sur la figure illustrent la projection effectuée.

Bien entendu, dans le cas général les valeurs obtenues par application de la matrice de projection sont des valeurs réelles, donc un opérateur d'interpolation est appliqué pour obtenir les valeurs d'intensité de l'image numérique initiale, $I(x_k,y_k)$, correspondant aux P points dans le quadrillage 75.

La valeur d'intensité attribuée au point de coordonnées (x',y') du motif de référence projeté est calculée à partir de ces P valeurs d'intensité, par exemple par calcul de la moyenne des P valeurs d'intensité :

[MATH 5 ]

$$I(x', y') = \frac{1}{P} \sum_{k=1}^{P} I(x_k, y_k)$$

Selon un deuxième mode de réalisation, décrit en référence à la figure 5, la projection est effectuée à partir des points de l'image numérique initiale 70 vers les points du quadrillage unitaire de projection 74.

Chaque point (ou pixel) 78 de coordonnées (x,y) du quadrillage 75 de l'image numérique initiale est projeté en un point de coordonnées (x',y') du quadrillage unitaire de projection 74, en appliquant la matrice de projection $Proj^{-1}$ décrite dans l'équation [MATH 2] :

[MATH 6]

$$(x', y') = Proj^{-1} \times (x, y)^T$$

De plus, un opérateur modulo vectoriel, tel qu'explicité dans la formule [MATH 3] est appliqué, avec les valeurs de (m,n) définissant la répétition de motif choisies.

De plus, les valeurs (x',y') étant dans le cas général des valeurs réelles, un opérateur permettant de passer des valeurs réelles à des valeurs entières est appliqué, pour obtenir des coordonnées du quadrillage unitaire de projection.

Par exemple, la partie entière de chacune des coordonnées est retenue.

Plusieurs pixels $78_1$ à $78_P$ du quadrillage 75 de l'image numérique initiale, sont projetés sur un point 80 du quadrillage unitaire de projection 74.

De préférence, la valeur d'intensité attribuée au point 80 est calculée en moyennant les valeurs d'intensités des pixels $78_1$ à $78_P$.

De retour à la figure 2, l'étape 40 de projection est suivie d'une étape 46 de calcul d'un motif élémentaire de référence dans le repère de référence initial, formé par les vecteurs $\vec{V_0}$ et $\vec{V_1}$, qui sera appelé ci-après plus simplement motif élémentaire.

A partir du motif de référence projeté formé sur le quadrillage unitaire de projection, une projection vers le repère de référence initial est appliquée, et les valeurs d'intensité correspondantes sont calculées en appliquant un opérateur d'interpolation.

Par exemple l'opérateur d'interpolation est un opérateur bilinéaire, connu dans le domaine du traitement d'images. L'opérateur bilinéaire a l'avantage de la simplicité et de la rapidité calculatoire.

En variante, d'autres opérateurs d'interpolation connus sont applicables.

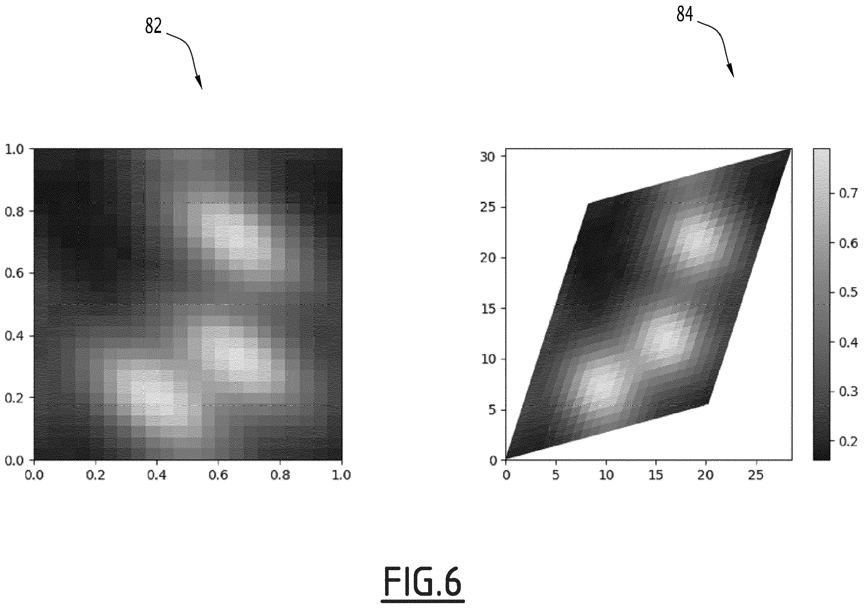

Un exemple de motif de référence projeté 82 et de motif élémentaire 84 correspondant, dans le repère de référence initial formé par les vecteurs $\vec{V_0}$ et $\vec{V_1}$, est illustré dans la **figure 6.**

Le motif élémentaire 84 est une estimation du motif qui est répété périodiquement dans l'image initiale représentative de grandeurs physiques.

Avantageusement, le motif élémentaire 84 est représentatif en moyenne de répétitions périodiques dans l'image initiale.

Le procédé comporte ensuite une étape d'utilisation 48 du motif élémentaire.

Selon un mode de réalisation, l'utilisation 48 comporte une étape 50 de calcul d'une image numérique reconstruite. Cette image numérique reconstruite est une image périodisée.

Les dimensions de l'image reconstruite sont choisies par exemple égales aux dimensions de l'image numérique initiale.

Selon une variante, l'image reconstruite a des dimensions choisies différentes des dimensions de l'image numérique initiale.

Dans un mode de réalisation, à chaque pixel de coordonnées (x,y) dans le quadrillage 75, sur lequel est représentée l'image numérique initiale, une valeur d'intensité est calculée en mettant en oeuvre la projection pour obtenir des coordonnées (x',y') correspondantes sur le quadrillage unitaire de projection, puis une valeur d'intensité correspondante dans le motif élémentaire calculé lors l'étape 46 :

I(x,y)=Interpol(x',y') où Interpol() est l'opérateur d'interpolation.

L'image numérique reconstruite périodisée ainsi obtenue est une image simulée ou théorique, qui comprend une répétition régulière théorique du motif élémentaire calculé.

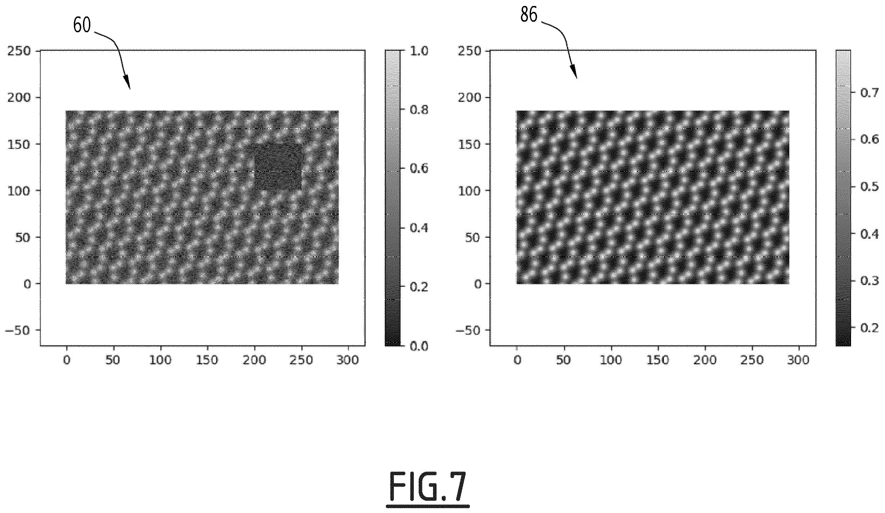

La **figure 7** illustre l'image numérique reconstruite périodisée 86 obtenue pour l'image numérique initiale 60.

Le procédé comprend ensuite une étape 52 de détection de défauts à partir de l'image numérique reconstruite périodisée.

Dans un mode de réalisation, lorsque l'image numérique reconstruite périodisée a les mêmes dimensions (même quadrillage 75) que l'image numérique initiale, lors de l'étape 52 une différence entre valeurs d'intensité de l'image numérique initiale et de l'image numérique reconstruite périodisée, point à point, est calculée, et forme une image de différence.

L'image de différence comprend le bruit présent dans l'image numérique initiale, ainsi que les défauts structurels.

Ainsi, grâce au procédé décrit, le bruit présent dans l'image numérique initiale est estimé, et une utilisation complémentaire ou alternative consiste à débruiter l'image numérique initiale en soustrayant le bruit estimé à cette image.

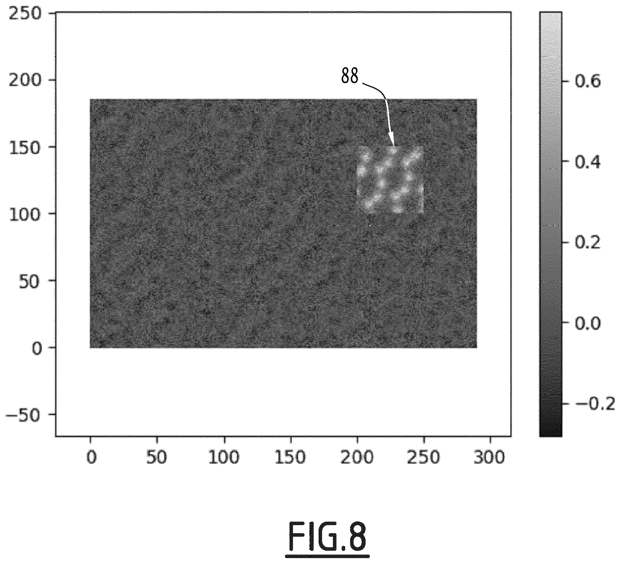

La **figure 8** illustre l'image de différence 88 obtenue à partir de l'image numérique reconstruite périodisée 86 et de l'image numérique initiale 60.

Pour une détection de défauts, par exemple, un opérateur de seuillage ou un opérateur de filtrage est appliqué pour distinguer entre bruit et défaut structurel.

En variante, il est envisageable d'utiliser des opérateurs plus sophistiqués, en appliquant des méthodes d'apprentissage machine (en anglais « machine learning ») ou de regroupement (en anglais « clustering »).

Dans un autre mode de réalisation, l'étape 48 d'utilisation du motif élémentaire calculé met en oeuvre un calcul de la variabilité dimensionnelle de l'image en mettant en oeuvre un calcul de variabilité dimensionnelle du motif élémentaire de référence dans le repère de référence initial.

Dans ce mode de réalisation, ou en complément de la détection de défauts, l'étape 48 comporte un calcul de variabilité dimensionnelle, par exemple de variabilité latérale et/ou de variabilité verticale du motif élémentaire de référence dans le repère de référence initial.

La variabilité dimensionnelle est calculée selon un nombre quelconque de directions spatiales, une, deux ou plus.

Dans un mode de réalisation particulier, la variabilité dimensionnelle est calculée pour deux directions (ou dimensions), respectivement latérale et verticale, correspondant aux lignes et colonnes du motif élémentaire de référence.

Le calcul de variabilité dimensionnelle comporte, pour au moins une direction choisie, un calcul de profil dudit motif élémentaire de référence selon ladite direction.

Le calcul de profil met en oeuvre par exemple un calcul d'écart type moyen du motif élémentaire de référence, dans le repère de référence initial, selon la direction choisie.

Par exemple, ce calcul met en oeuvre un calcul d'écart type moyen par ligne et/ou par colonne dudit motif élémentaire de référence, dans le repère de référence initial.

En variante, pour chaque direction choisie, à partir des pixels du motif élémentaire de référence, dans le repère de référence initial, un profil moyen par dimension est calculé.

Par exemple, le calcul de la variabilité dimensionnelle comprend une extraction de profils dans des directions d'espace (ou dimensions) choisies, par exemple d'un bord à l'autre du motif pour caractériser ses variations de taille et/ou de positionnement.

Selon une autre variante, la variabilité est calculée de manière multidirectionnelle, par exemple par calcul d'un rayon moyen d'un motif élémentaire de forme circulaire, en appliquant une intégration sur 360°.

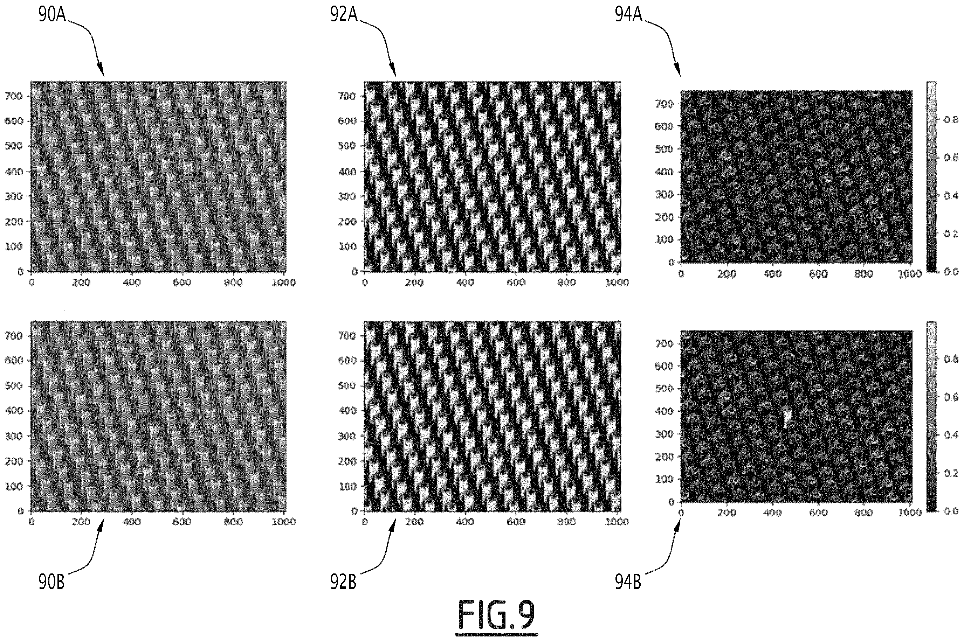

La **figure 9** illustre l'application du procédé décrit ci-dessus pour la détection de défauts dans une image numérique initiale de type forêt de nanofils, et montre qu'il est possible de mettre en exergue l'absence d'un nanofil dans la structure.

L'image 90A est une image numérique initiale comportant une forêt de nanofils sans défaut structurel et l'image 90B est une image numérique initiale comportant une forêt de nanofils, similaire à l'image 90A, mais dans laquelle un défaut structurel est présent.

Les images numériques reconstruites périodisées 92A et 92B sont quasiment identiques, les variations d'intensité point à point entre les deux images étant inférieures à 1 %.

Les images de différence respectives 94A et 94B sont différentes, le défaut structurel 96 de l'image numérique initiale 90B étant mis en exergue dans l'image numérique 94B.

Ainsi, avantageusement, le procédé proposé permet, dans une de ses applications, de détecter et de localiser des défauts.

De plus, avantageusement, le procédé proposé permet d'estimer un motif élémentaire qui se répète dans l'image numérique initiale représentative de grandeurs physiques, et un motif de référence projeté dans un repère orthonormé.

L'obtention de tels motifs permet de caractériser la variabilité dimensionnelle du motif élémentaire.

Le procédé proposé a été testé pour des aires croissantes de défauts d'absence de répétition de motif, et il a été constaté que le procédé permet de calculer automatiquement le motif élémentaire qui se répète périodiquement à partir d'une image numérique initiale comportant jusqu'à 35% de défauts, et de détecter automatiquement les défauts présents.

Ainsi, avantageusement, le procédé proposé est robuste et auto-adaptatif.

De plus, le procédé est robuste aux variations des conditions d'acquisition d'image (changement de niveaux de gris, changement de focus), et ne nécessite pas une initialisation avec des paramètres adaptés en cas de telles variations.

Avantageusement, le procédé proposé permet de détecter automatiquement les directions des vecteurs de base représentatifs de la répétition de motifs, et ne nécessite pas de pré-traitement pour un alignement préalable des axes des motifs avec les axes de l'image numérique initiale.

Le procédé a été décrit ci-dessus dans son application pour détecter et calculer un motif de référence projeté et un motif élémentaire associé, mais il s'applique de manière analogue pour détecter une combinaison de mxn motifs.

**Revendications**

1. Procédé de calcul automatique de motif élémentaire dans une image numérique représentative de grandeurs physiques comportant une répétition périodique de motifs, l'image numérique étant représentée par au moins une matrice de pixels, chaque pixel ayant une valeur d'intensité, le procédé étant **caractérisé en ce qu'**il comporte des étapes mises en oeuvre par un processeur de calcul, de :

   - obtention (30) d'une image numérique initiale,
   - détermination (32) d'au moins deux périodes de répétition périodique de motifs dans l'image numérique initiale, chaque période étant définie par un vecteur de base ayant une direction et une longueur associées, lesdits vecteurs de base formant un repère de référence initial,
   - détermination (42) d'une matrice de projection permettant de passer du repère de référence initial à un repère de référence orthonormé,
   - calcul (44) d'un motif de référence projeté, dans le repère de référence orthonormé, en mettant en oeuvre ladite matrice de projection pour mettre en correspondance une pluralité de pixels de l'image numérique initiale et un pixel dudit motif de référence projeté,
   - calcul (46) d'un motif élémentaire de référence, dans le repère de référence initial, à partir du motif de référence projeté dans le repère de référence orthonormé.

2. Procédé selon la revendication 1, dans lequel l'obtention (30) d'une image numérique initiale comporte une acquisition de ladite image numérique initiale par microscopie, ladite image numérique initiale étant représentative d'un échantillon de matériau.

3. Procédé selon l'une des revendications 1 ou 2, dans lequel la détermination (32) d'au moins deux périodes de répétition périodique de motifs comporte un calcul d'autocorrélation (34) de l'image numérique initiale pour obtenir un champ d'autocorrélation, et une détection des maxima (36) dans ledit champ d'autocorrélation.

4. Procédé selon l'une quelconque des revendications 1 à 3, dans lequel le calcul (44) d'un motif de référence projeté comporte, pour chaque pixel dudit motif de référence dans le repère de référence orthonormé, un calcul d'une valeur d'intensité dudit pixel comportant une projection pour obtenir une pluralité de pixels correspondants dans l'image numérique initiale, et un calcul d'une valeur moyenne des valeurs d'intensité desdits pixels correspondants.

5. Procédé selon l'une des revendications 1 à 4, dans lequel le calcul (46) d'un motif élémentaire de référence dans le repère de référence initial à partir du motif de référence projeté dans le repère de référence orthonormé met en oeuvre un opérateur d'interpolation.

6. Procédé selon la revendication 5, dans lequel ledit opérateur d'interpolation met en oeuvre une interpolation bilinéaire.

7. Procédé selon l'une quelconque des revendications 1 à 6, comportant en outre des étapes de calcul (50) d'une image numérique reconstruite périodisée et de détection (52) de défauts par estimation d'une différence entre l'image numérique initiale et l'image numérique reconstruite périodisée.

8. Procédé selon la revendication 7, dans lequel le calcul (50) d'une image numérique reconstruite périodisée comporte un calcul de ladite image numérique reconstruite périodisée en utilisant la matrice de projection et les valeurs d'intensité dudit motif élémentaire de référence.

9. Procédé selon l'une quelconque des revendications 1 à 8, comportant en outre une étape (48) de calcul de variabilité dimensionnelle du motif élémentaire de référence dans le repère de référence initial.

10. Procédé selon la revendication 9, dans lequel le calcul de variabilité dimensionnelle comporte, pour au moins une direction choisie, un calcul de profil dudit motif élémentaire de référence dans le repère de référence initial selon ladite direction.

11. Programme d'ordinateur comportant des instructions logicielles qui, lorsqu'elles sont exécutées par un dispositif électronique programmable, mettent en oeuvre un procédé calcul automatique de motif élémentaire conforme aux revendications 1 à 10.

12. Dispositif de calcul automatique de motif élémentaire dans une image numérique représentative de grandeurs physiques comportant une répétition périodique de motifs, l'image numérique étant représentée par au moins une matrice de pixels, chaque pixel ayant une valeur d'intensité, le dispositif étant **caractérisé en ce qu'**il comporte un processeur de calcul, configuré pour mettre en oeuvre :

    - un module (16) d'obtention d'une image numérique initiale,
    - un module (18) de détermination d'au moins deux périodes de répétition périodique de motifs dans l'image numérique initiale, chaque période étant définie par un vecteur de base ayant une direction et une longueur associées, lesdits vecteurs de base formant un repère de référence initial,
    - un module (20) de détermination d'une matrice de projection permettant de passer du repère de référence initial à un repère de référence orthonormé, et de calcul d'un motif de référence projeté, dans le repère de référence orthonormé, en mettant en oeuvre ladite matrice de projection pour mettre en correspondance une pluralité de pixels de l'image numérique initiale et un pixel dudit motif de référence projeté, et
    - un module (22) de calcul d'un motif élémentaire de référence, dans le repère de référence initial, à partir du motif de référence projeté dans le repère de référence orthonormé.

13. Dispositif selon la revendication 12, comportant en outre :

    - un module (24) de calcul d'une image numérique reconstruite périodisée, et de détection de défauts par estimation d'une différence entre l'image numérique initiale et l'image numérique reconstruite périodisée.

14. Dispositif selon la revendication 12, comportant en outre un module (24) de calcul de variabilité dimensionnelle du motif élémentaire de référence dans le repère de référence initial.

FIG.1

EP 4 339 889 A1

```
30 ──⟋ ┌─────────────────────────────────┐
        │ Obtention image numérique initiale │
        └─────────────────────────────────┘
                        │
                        ▼                              32
        ┌ ─ ─ ─ ─ ─ ─ ─ ─ ─ ─ ─ ─ ─ ─ ─ ─ ─ ─ ─ ─⟋
        │ ┌─────────────────────────────────┐ │
34 ──⟋  │ │       Calcul autocorrélation      │ │
        │ └─────────────────────────────────┘ │
        │                                      │
        │ ┌─────────────────────────────────┐ │
36 ──⟋  │ │        Détection maxima          │ │
        │ └─────────────────────────────────┘ │
        │                                      │
        │ ┌─────────────────────────────────┐ │
38 ──⟋  │ │  Détermination vecteurs de base   │ │
        │ └─────────────────────────────────┘ │
        └ ─ ─ ─ ─ ─ ─ ─ ─ │ ─ ─ ─ ─ ─ ─ ─ ─ ─ ┘
                          ▼                         40
        ┌ ─ ─ ─ ─ ─ ─ ─ ─ ─ ─ ─ ─ ─ ─ ─ ─ ─ ─ ─ ─⟋
        │ ┌─────────────────────────────────┐ │
42 ──⟋  │ │ Détermination matrice de projection │ │
        │ └─────────────────────────────────┘ │
        │                                      │
        │ ┌─────────────────────────────────┐ │
44 ──⟋  │ │   Calcul motif de référence projeté │ │
        │ └─────────────────────────────────┘ │
        └ ─ ─ ─ ─ ─ ─ ─ ─ ─ ─ ─ ─ ─ ─ ─ ─ ─ ─ ─ ┘
```

Calcul motif élémentaire dans repère de référence initial — 46

Calcul d'image reconstruite — 50, 48

Détection défauts — 52

FIG.2

FIG.3

EP 4 339 889 A1

FIG.4

FIG.5

FIG.6

**FIG.7**

EP 4 339 889 A1

FIG.8

FIG.9

EP 4 339 889 A1

Europäisches
Patentamt

European
Patent Office

Office européen
des brevets

# RAPPORT DE RECHERCHE EUROPEENNE

Numéro de la demande

**EP 23 19 7075**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LIN H-C ET AL: "Extracting periodicity of a regular texture based on autocorrelation functions", PATTERN RECOGNITION LETTERS, ELSEVIER, AMSTERDAM, NL, vol. 18, no. 5, 1 mai 1997 (1997-05-01), pages 433-443, XP004730038, ISSN: 0167-8655, DOI: 10.1016/S0167-8655(97)00030-5 | 1-6,11, 12 | INV. G06T7/49 G06T7/529 G06T5/00 G06T11/00 G01N21/956 |
| Y | * le document en entier * * abrégé * * figure 13 * * P434col2 * * P442col2-P443col1 * * P438col1-P439col1 * ----- | 1-14 | ADD. G06T3/00 G06T7/00 G06T3/40 |
| Y | US 2012/133779 A1 (MA YI [CN] ET AL) 31 mai 2012 (2012-05-31) * le document en entier * * abrégé * * figures 2,7,9,12 * * alinéas [0002], [0010], [0012] * * alinéas [0100] - [0108] * * alinéa [0121] * ----- | 1-14 | |
| Y | HAN-BIN KIM ET AL: "EXTRACTING SPATIAL ARRANGEMENT OF STRUCTURAL TEXTURES USING PROJECTION INFORMATION", PATTERN RECOGNITION, ELSEVIER, GB, vol. 25, no. 3, 1 mars 1992 (1992-03-01), pages 237-245, XP000272496, ISSN: 0031-3203, DOI: 10.1016/0031-3203(92)90107-T * le document en entier * * figures 1,4 * * abrégé * * P237Col2-P241Col2 * ----- | 9,10,14 | |

|  |  |
|---|---|
| | DOMAINES TECHNIQUES RECHERCHES (IPC) |
| | G01N G06T |

-/--

Le présent rapport a été établi pour toutes les revendications

| Lieu de la recherche | Date d'achèvement de la recherche | Examinateur |
|---|---|---|
| La Haye | 6 novembre 2023 | Thollot, Julien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P04C02)

# EP 4 339 889 A1

Europäisches
Patentamt

European
Patent Office

Office européen
des brevets

## RAPPORT DE RECHERCHE EUROPEENNE

Numéro de la demande

EP 23 19 7075

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | XIN WANG ET AL: "Fabric Texture Analysis Using Computer Vision Techniques", IEEE TRANSACTIONS ON INSTRUMENTATION AND MEASUREMENT, IEEE, USA, vol. 60, no. 1, 1 janvier 2011 (2011-01-01), pages 44-56, XP011341024, ISSN: 0018-9456, DOI: 10.1109/TIM.2010.2069850 * le document en entier * * figure 4 *  ----- | 1-14 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 6 novembre 2023 | Thollot, Julien |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

21

## ANNEXE AU RAPPORT DE RECHERCHE EUROPEENNE
## RELATIF A LA DEMANDE DE BREVET EUROPEEN NO.

**EP 23 19 7075**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**06-11-2023**

| Document brevet cité au rapport de recherche | Date de publication | Membre(s) de la famille de brevet(s) | Date de publication |
|---|---|---|---|
| US 2012133779 A1 | 31-05-2012 | CN 102521808 A | 27-06-2012 |
| | | EP 2646982 A1 | 09-10-2013 |
| | | US 2012133779 A1 | 31-05-2012 |
| | | WO 2012074699 A1 | 07-06-2012 |

EPO FORM P0460

## RÉFÉRENCES CITÉES DANS LA DESCRIPTION

**Littérature non-brevet citée dans la description**

- **LIN et al.** Extracting periodicity of a regular texture based on autocorrelation functions. *Pattern Recognition Letters,* Mai 1997, vol. 19